# EUROPÄISCHE PATENTSCHRIFT

(11) **EP 0 441 137 B1**
(45) Veröffentlichungstag und Bekanntmachung des Hinweises auf die Patenterteilung: **18.11.1993**
(21) Anmeldenummer: 91100487.7
(22) Anmeldetag: 17.01.1991
(51) Int. Cl.: F16L 55/04, G10K 11/16

(54) **Leitungsanordnung zwischen Geber- und Nehmerzylinder einer im Antriebsstrang eines Kraftfahrzeuges angeordneten hydraulisch betätigten Kuppelung**
Pipe arrangement between a master and slave cylinder of a hydraulic driven clutch placed in the transmission system of an automotive vehicle
Ensemble de conduites entre un maître-cylindre et un cylindre récepteur d'un embrayage hydraulique placé dans le circuit d'entraînement d'un véhicule à moteur

(30) Priorität: 06.02.1990 DE 4003521
(43) Veröffentlichungstag der Anmeldung: 14.08.1991
(73) Patentinhaber: MERCEDES-BENZ AG, 70327 Stuttgart (DE)
(72) Erfinder: Priwitzer, Michael, W-7300 Esslingen (DE)

(56) Entgegenhaltungen:
- EP-A- 0 200 160
- CH-A- 115 352
- DE-A- 2 938 799
- MACHINE DESIGN, Band 51, Nr. 7, März 1979, Seiten 120-126; S.J. SKAISTIS: "New techniques muffle hydraulic noise"

## Beschreibung

Die Erfindung betrifft eine Leitungsanordnung zwischen Geberzylinder und Nehmerzylinder einer im Antriebsstrang eines Kraftfahrzeuges angeordneten hydraulisch betätigten Kupplung.

Zumindest bei schweren Kraftfahrzeugen mit manuell geschalteten Getrieben ist eine hydraulische Betätigung der im Antriebsstrang des Kraftfahrzeuges - in der Regel zwischen Motor und Getriebe - angeordneten Kupplung üblich. Hierbei wird mittels eines Kupplungspedales ein Geberzylinder betätigt, welcher über eine Hydraulikleitung mit einem Nehmerzylinder verbunden ist, der seinerseits bei Betätigung des Kupplungspedales die Kupplung öffnet. Obwohl bei einer derart hydraulisch betätigten Kupplung keine mechanische Verbindung zwischen Kupplungspedal und Fahrzeugmotor vorliegt, werden des öfteren störende Schwingungen oder Vibrationen vom Motor auf das Kupplungspedal übertragen.

Um diese störenden Schwingungen und Vibrationen des Kupplungspedales zu vermeiden, ist es aus den deutschen Offenlegungsschriften 29 38 799 und 36 31 507 bekannt, an bzw. in der genannten hydraulischen Leitung einen Schwingungsdämpfer anzuordnen. Der damit verbundene konstruktive Aufwand ist jedoch relativ groß.

In der Druckschrift "ölhydraulik und pneumatik" 20 (1976) Nr. 7, Seiten 461 ff., wird eine systematische Übersicht über Dämpfungsmaßnahmen in Druckleitungen gegeben, und zwar insbesondere in Druckleitungen von Hydropumpen. Dabei werden verschiedene Interferenz- bzw. Reflexionsdämpfer grundsätzlich beschrieben bzw. dargestellt, z.B. ein sogenanntes Quincke-Rohr. Hierbei ist an einer Hauptleitung eine Umwegleitung angeordnet, deren Enden an voneinander entfernten Stellen seitlich in die Hauptleitung einmünden.

Auch in der Druckschrift "Machine Design", Band 51, No. 7, März 1979, wird eine Übersicht über mögliche Maßnahmen zur Dämpfung hydraulischer Geräusche gegeben. Dabei wird ebenfalls auf das sogenannte Quincke-Rohr hingewiesen.

Es werden jedoch keinerlei Hinweise darauf gegeben, daß eine der dargestellten Anordnungen für die Unterdrückung von Schwingungen bzw. Vibrationen an einer Hydraulikleitung zwischen Geber- und Nehmerzylinder einer hydraulisch betätigten Kupplung im Antriebsstrang eines Kraftfahrzeuges besonders geeignet sein könnten.

In der zuletztgenannten Druckschrift "Machine Design" wird im Zusammenhang mit geräuschübertragenden Leitungen hervorgehoben, daß für die Vermeidung von Geräuschen u.dgl. vor allem entsprechende Halterungen der Leitungen wesentlich sind (vgl. Seite 123, linke Spalte, unten, sowie mittlere Spalte, oben).

Im übrigen wird in der letztgenannten Druckschrift auch erwähnt, daß das Volumen des hydraulischen Mediums im hydraulischen System Einfluß auf die Geräuschentwicklung hat, d.h. die Intensität von Schwingungen hängt auch von der hydraulischen Kapazität ab.

Dies geht auch aus der Druckschrift "ölhydraulik und pneumatik" 18 (1974) Nr. 10, Seiten 749 ff. hervor. Grundsätzlich läßt sich also die Übertragbarkeit von Schwingungen in hydraulischen Systemen durch Veränderung der Leitungsquerschnitte bzw. durch andere Bemessungen der wirksamen Flächen verändern.

Aus den japanischen Offenlegungsschriften 58-155274 und 61-200375 sind Einspritzsysteme bekannt, bei denen an der Verbindungsleitung zwischen Pumpe und Einspritzdüse eine Querschnittsänderung angeordnet bzw. eine Sackleitung angeschlossen ist. Dabei sind die Längen der Leitungsabschnitte vor und hinter der Querschnittsänderung bzw. dem Anschluß der Sackleitung sowie die Länge der Sackleitung so bemessen, daß die von der Einspritzpumpe erzeugte Druckwelle und die durch die Querschnittsänderung bzw. die angeschlossene Sackleitung verursachte reflektierte Druckwelle durch Überlagerung miteinander zu einer Druckerhöhung in der Leitung zwischen Einspritzpumpe und Einspritzdüse führen.

Aufgabe der Erfindung ist es nun, eine konstruktiv einfache Anordnung aufzuzeigen, mit der die Übertragung von Schwingungen und Vibrationen zwischen dem Motor eines Kraftfahrzeuges und dem Kupplungspedal zur Betätigung der im Antriebsstrang des Kraftfahrzeuges angeordneten Kupplung wirksam unterbunden wird.

Diese Aufgabe wird erfindungsgemäß durch eine Doppelleitung gelöst, deren Leitungszweige derart unterschiedlich bemessene Längen aufweisen, daß am Geberzylinder vom Fahrzeugmotor erregte und sich über die Doppelleitung fortpflanzende Schwingungen und Vibrationen am Nehmerzylinder zumindest teilweise durch Interferenz zwischen den über den einen Leitungszweig und den über den anderen Leitungszweig übertragenen Schwingungen und Vibrationen ausgelöscht werden.

Die der Erfindung gestellte Aufgabe wird also in verblüffend einfacher Weise gelöst. Im wesentlichen ist neben der ohnehin notwendigen einen Leitung zwischen Geber- und Nehmerzylinder nur ein zweiter Leitungszweig erforderlich, dessen Länge von der Frequenz der ohne zweiten Leitungszweig übertragenen Schwingungen bzw. Vibrationen abhängig ist bzw. in von dieser Frequenz abhängiger Weise abweichend von dem einen Leitungszweig bemessen sein muß.

Der optimale Längenunterschied der Leitungszweige kann sehr schnell durch Versuche festgestellt werden.

Ein Vorzug der Erfindung liegt unter anderem darin, daß eine Nachrüstung bisheriger Kraftfahrzeuge mit der erfindungsgemäßen Doppelleitung zwischen Nehmer- und Geberzylinder der hydraulisch betätigten Kupplung praktisch ohne weiteres möglich ist.

Grundsätzlich besteht die Möglichkeit, die Leitungszweige hydraulisch getrennt voneinander abzuordnen, weil die Leitungszweige über die Gehäuse der jeweils angeschlossenen Zylinder schwingungsmäßig miteinander gekuppelt sind, so daß die Auslöschung von Schwingungen bzw. Vibrationen durch Interferenz auch in diesem Falle möglich ist.

Da jedoch die Übertragung der Schwingungen bzw. Vibrationen in der Regel vornehmlich durch das fluidische Medium, insbesondere im Falle hydraulischer Systeme, erfolgt, kann eine besonders wirksame Auslöschung von Schwingungen und Vibrationen durch Inferferenz erwartet werden, wenn die Leitungszweige miteinander kommunizieren, wobei eine Verbindung der Leitungszweige an bzw. in beiden angeschlossenen Aggregaten bevorzugt ist.

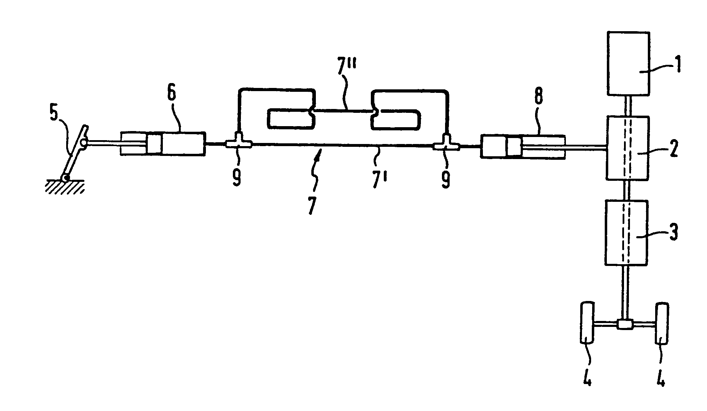

Im übrigen wird hinsichtlich bevorzugter Merkmale der Erfindung auf die Ansprüche sowie die nachfolgende Erläuterung einer vorteilhaften Ausführungsform der Erfindung anhand der Zeichnung verwiesen.

Dabei zeigt die einzige Figur eine schaltplanartig schematisierte Darstellung eines Antriebsstranges eines Kraftfahrzeuges mit hydraulisch betätigter Kupplung, deren Nehmerzylinder entsprechend der Erfindung über eine Doppelleitung mit dem durch Pedal betätigten Geberzylinder verbunden ist.

Das nicht näher dargestellte Kraftfahrzeug besitzt einen Verbrennungsmotor 1, welcher - praktisch unvermeidbar - Schwingungen bzw. Vibrationen anzuregen sucht. Dieser Motor 1 ist über eine Kupplung 2 mit einem manuell schaltbaren Getriebe 3 antriebsmäßig verbindbar, dessen Ausgang die Motorleistung auf die Antriebsräder 4 des Fahrzeuges überträgt.

Die Kupplung 2 wird hydraulisch betätigt. Dazu wird der Stellhub eines fahrerseitig betätigbaren Pedales 5 auf den Kolben eines Geberzylinders 6 übertragen, welcher über eine Doppelleitung 7 mit einem Nehmerzylinder 8 hydraulisch verbunden ist, welcher seinerseits zur Betätigung der Kupplung 2 dient. Wird das Pedal 5 niedergetreten, so wird die Kupplung 2 geöffnet.

Die Leitungszweige 7' und 7'' der Doppelleitung 7 sind an dem Geberzylinder 6 sowie dem Nehmerzylinder 8 über T-Stücke 9 miteinander verbunden.

Die Längen der Leitungszweige 7' und 7'' sind unterschiedlich bemessen, derart, daß Schwingungen und Vibrationen, die vom Motor 1 über die Kupplung 2 auf den Nehmerzylinder 8 und damit auf die Doppelleitung 7 übertragen werden, am Geberzylinder 6 durch Interferenz der über den einen Leitungszweig 7' übertragenen Schwingungen bzw. Vibrationen mit den über den anderen Leitungszweig 7'' übertragenen Schwingungen bzw. Vibrationen ausgelöscht werden.

Dementsprechend ist der Geberzylinder 6 gegenüber den Schwingungen und Vibrationen abgeschirmt, so daß auch im Pedal 5 keine Schwingungen oder Vibrationen auftreten können.

Da die Übertragbarkeit von Schwingungen auch vom Druck in der Doppelleitung 7 bzw. den Geber- und Nehmerzylindern 6 und 8 abhängig ist und in der Regel mit geringer werdendem Druck abnimmt, ist zusätzlich bevorzugt vorgesehen, Geber- und Nehmerzylinder 6 und 8 mit relativ großen Kolbenquerschnitten anzuordnen, um den notwendigen Betriebsdruck so weit als möglich abzusenken.

Gegebenenfalls kann an zumindest einem Leitungszweig 7' ,7'' eine Vorrichtung zur Veränderung der Länge dieses Leitungszweiges angeordnet sein, um das Längenverhältnis der Leitungszweige 7',7'' zur Erzielung einer optimalen Interferenz der Schwingungen bzw. Vibrationen verändern bzw. justieren zu können.

## Patentansprüche

1. Leitungsanordnung zwischen Geberzylinder und Nehmerzylinder einer im Antriebsstrang eines Kraftfahrzeuges angeordneten hydraulisch betätigten Kupplung,
**gekennzeichnet,**
durch eine Doppelleitung (7), deren Leitungszweige (7',7'') derart unterschiedlich bemessene Längen aufweisen, daß am Geberzylinder (6) vom Fahrzeugmotor (1) erregte und sich über die Doppelleitung (7) fortpflanzende Schwingungen und Vibrationen am Nehmerzylinder (8) zumindest teilweise durch Interferenz zwischen den über den einen Leitungszweig (7') und den über den anderen Leitungszweig (7'') übertragenen Schwingungen und Vibrationen ausgelöscht werden.

2. Leitungsanordnung nach Anspruch 1,
**dadurch gekennzeichnet,**
daß die Leitungszweige (7',7'') miteinander kommunizieren.

3. Leitungsanordnung nach Anspruch 2,
**dadurch gekennzeichnet,**
daß die Leitungszweige (7',7'') an bzw. in den beiden Zylindern (6,8) miteinander verbunden sind.

4. Leitungsanordnung nach einem der Ansprüche 1 bis 3,
**dadurch** **gekennzeichnet**,
daß die Länge eines der Leitungszweige (7',7'') veränderbar ist.

5. Leitungsanordnung nach einem der Ansprüche 1 bis 4,
**dadurch** **gekennzeichnet**,
daß Geber- und Nehmerzylinder (6,8) mit solch geringem Druck arbeiten und zur Erreichung eines solch geringen Druckes entsprechend große Wirkflächen bzw. Querschnitte aufweisen, daß druckabhängige Schwingungs- und Vibrationsübertragungen vermieden werden.

## Claims

1. An arrangement of pipes between master cylinder and slave cylinder of a hydraulically actuated clutch disposed in the drive line of a motor vehicle, characterised by a double pipe (7), the branches (7', 7'') of which are of such differently dimensioned lengths that oscillations and vibrations generated at the master cylinder (6) by the vehicle engine (1) and propagating via the double pipe (7) are at the slave cylinder (8) at least partially cancelled out by interference between the oscillations and vibrations transmitted via the one pipe branch (7') and the other pipe branch (7'').

2. An arrangement of pipes according to Claim 1, characterised in that the pipe branches (7', 7'') communicate with each other.

3. An arrangement of pipes according to Claim 2 characterised in that the pipe branches (7', 7'') are connected to each other at or in the two cylinders (6, 8).

4. An arrangement of pipes according to one of Claims 1 to 3, characterised in that the length of one of the pipe branches (7', 7'') is variable.

5. An arrangement of pipes according to one of Claims 1 to 4, characterised in that master and slave cylinders (6, 8) operate at such low pressure and, in order to achieve such a low pressure have correspondingly large working surfaces or cross-sections that the transmission of pressure-dependent oscillations and vibrations are avoided.

## Revendications

1. Ensemble de conduites entre un maître-cylindre et un cylindre récepteur d'un embrayage hydraulique placé en circuit d'entraînement d'un véhicule à moteur, caractérisé par une conduite double (7), dont les branches de conduites (7',7'') présentent des longueurs de différence telle que des pulsations et des vibrations excitées sur le maître-cylindre (6), par le moteur (1) du véhicule et se propageant par l'intermédiaire de la conduite double (7) sont étouffées au moins partiellement, au cylindre récepteur (8), par interférence entre les pulsations et vibrations transmises par la première branche de conduite (7') et celles transmises par la deuxième branche de conduite (7'').

2. Ensemble de conduites selon la revendication 1, caractérisé en ce que les branches de conduites (7',7'') communiquent entre elles.

3. Ensemble de conduites selon la revendication 2, caractérisé en ce que les branches de conduites (7',7'') sont reliées ensemble au niveau des, respectivement dans les deux cylindres (6,8).

4. Ensemble de conduites selon l'une des revendications 1 à 3, caractérisé en ce que la longueur de l'une des branches de conduites (7',7'') peut être modifiée.

5. Ensemble de conduites selon l'une des revendications 1 à 4, caractérisé en ce que le maître-cylindre et le cylindre récepteur (6,8) travaillent avec une pression de niveau si faible, et présentent, pour obtenir une pression d'un tel faible niveau, des surfaces actives ou des sections transversales de grandeur correspondante, que toute transmission des pulsations et vibrations imputable à la pression est évitée.
